# EUROPEAN PATENT SPECIFICATION

(11) **EP 0 600 539 B1**
(45) Date of publication and mention of the grant of the patent: **21.05.1997**
(21) Application number: 93203273.3
(22) Date of filing: 23.11.1993
(51) Int. Cl.: C11B 3/00, A23D 9/00

(54) **Olive oil blends**
Olivenölmischungen
Mélange d'huiles d'olive

(30) Priority: 03.12.1992 EP 92203751
(43) Date of publication of application: 08.06.1994
(73) Proprietor: UNILEVER N.V., NL-3000 DK Rotterdam (NL); UNILEVER PLC, London EC4P 4BQ (GB)
(72) Inventor: Ganguli, Keshab Lal, Unilever Research, NL-3133 AT Vlaardingen (NL); van Immerseel, Aton Reid, Unilever Research, NL-3133 AT Vlaardingen (NL); Michaelides, George, G-18547 N. Faliro, Pireus (GR); Polman, Robert George, Unilever Research, NL-3133 AT Vlaardingen (NL); van Putte, Karel P.A.M., Unilever Research, NL-3133 AT Vlaardingen (NL)
(74) Representative: Sikken, Antonius H. J. M.

(56) References cited:
- FR-A- 2 097 322
- US-A- 1 371 342
- AGRICULTURAL RESEARCH REVIEW vol. 55, no. 3 , 1977 pages 95 - 103 G. S. ABDELMALEK ET AL. 'Effects of thermal treatments and deacidifying agents on shemlali olive oil'
- KARLESKIND A. 'MANUEL DES CORPS GRAS. TOME 1' 1992 , LAVOISIER TEC & DOC. , PARIS, FR * page 227 *
- DATABASE WPI Week 8638, Derwent Publications Ltd., London, GB; AN 86-248826 & JP-A-61 176 698 (KAO CORP) 8 August 1986
- REVUE FRANCAISE DES CORPS GRAS vol. 18, no. 3 , 1971 , PARIS FR pages 143 - 150 C. THOMOPOULOS 'Méthode de désacidification des huiles par solvant sélectif'
- JOURNAL OF THE AMERICAN OIL CHEMISTS' SOCIETY. vol. 69, no. 5 , 1992 , CHAMPAIGN US pages 477 - 480 P. BONDOLI ET AL. 'Lampante olive oil refining with supercritical carbon dioxide'

## Description

This invention relates to olive oil blends and to a way for preparing purified olive oil for incorporation into olive oil blends.

Olive oil is offered on the market in a range of qualities. Olive oil of good quality is characterized by a fragrant and delicate flavour which is appreciated by the international gourmet and cherished by the native consumer. Virgin olive oils belong to the best quality olive oils. A virgin olive oil is defined as an oil which has been gained from the fruit of the olive tree solely by mechanical or other physical means under conditions, particular thermal conditions, that do not lead to alterations in the oil. The oil should not have been subjected to any treatment other than washing, decantation, centrifugation and filtration. More drastic methods for olive oil treatment, commonly denoted as refining comprise re-esterification, steam distillation and alkali neutralisation (alkali refining), which may lead to some modification in the molecular structure of the olive oil.
Extra virgin oil should have an absolutely perfect flavour and odour and an acidity in terms of oleic acid, of ≤1 g per 100 g oil. Fine virgin olive oil is allowed to have an acidity in terms of oleic acid, of ≤2.0 g per 100 g oil.

Semi-fine or regular virgin olive oil is allowed to have an acidity in terms of oleic acid, of ≤3.3 g per 100 g oil. When a virgin oil has an acidity of >3.3 g free fatty acids per 100 g oil it is denoted as Lampante oil. Because of its high acidity, off-smell and off-flavour the relatively cheap Lampante oil is only fit for human consumption after refining.

Blends of refined Lampante oil with non-refined virgin olive oil are still allowed to be denoted as "Pure olive oil", but quality indications as virgin or (semi-)fine are not allowed. Olive oil which is offered on the market as "Pure olive oil" most likely is an olive oil blend containing purified Lampante oil. Although it is not forbidden to offer *high quality* and consequently more expensive (extra) virgin oils as "pure olive oil", it is not sensible to do so because "pure olive oil" is considered to contain the lesser quality treated Lampante oil and to possess a characteristic flavour which might even be appreciated by a group of consumers.
However, in the context of this patent specification "pure olive oil blends" should be understood to comprise also blends made with (extra) virgin olive oil irrespective whether treated Lampante oil has been used for blending. Traditionally for the manufacture of "pure olive oil" blends olive oils are used which have been subjected to refining. Refined olive oils have, however, a rather bland taste. By carefully blending a refined oil with one or more savoury, but expensive virgin olive oils a good tasting olive oil blend is obtained for a reasonable price.

Olive oil which has been obtained by solvent extraction of olive residues is not allowed to be sold under the label "olive oil", even not when virgin oil in any amount is admixed.

### STATEMENT OF INVENTION

A pure olive oil blend has been found in which an alcohol washed virgin olive oil is incorporated.
This blend appears to possess a savoury flavour while it is much cheaper than traditional virgin olive oils blends having the same quality.

### DETAILS OF THE INVENTION

The washing of olive oil by an alcohol as such has already been described in US 1,371,342 and in Agricultural Research Review, vol. 55, (3) 1977, p. 95-103. According to these references an olive oil is obtained with a very low content of fatty acids. No attention was paid, however, to the effect of alcohol washing on flavour properties. It has now been found that with the major part of the fatty acids also off-flavour and bitter after-taste have disappeared with alcohol washing, while the characteristic and attractive olive oil flavour and colour largely have been retained. This is in contrast to the traditional Lampante oil refining which yields a product which has a bland flavour, no colour and a relatively high characteristic E270 extinction.
It has been found further that this alcohol washed olive oil can be advantageously used for preparing olive oil blends with the effect that a reduction on the relative high expenditure on the use of high quality virgin olive oil is possible.
The invention therefore relates to novel pure olive oil blends which contain a virgin olive oil which has been subjected to an alcohol washing. These blends are prepared with at least one high quality virgin olive oil taken from the group comprising extra virgin, fine and semi-fine virgin olive oils and, optionally, with regular refined olive oils. For the preparation of the blend preferably 5-95 wt.% of alcohol washed virgin olive oil is used.

From the point of view of costs the preferred olive oil for blend manufacture according to the present invention is alcohol washed Lampante oil. According to its method of production Lampante oil is a virgin oil with all inherent fine flavour components, but its overall flavour is spoiled by undesired contaminants. Surprisingly it has been found that an alcohol washing treatment selectively removes most of the undesired flavour components so that the original olive oil flavour can be appreciated again.
The scope of the invention comprises also the use of alcohol washed oils for olive oil blending.

The alcohol washed virgin olive oil is not necessarily a low quality olive oils. The washing process enables the modification of the flavour spectrum and/or of the colour of any olive oil by selectively removing some flavour components while other ones stay in the oil. The resulting olive oil, having a different flavour profile might be used as such or for blending purposes.

Alcohol washing of olive oil comprises the following steps:
A. intimately mixing olive oil with an alcohol or a mixture of an alcohol and water
B. separating the alcohol phase
C. removing the dissolved alcohol from the oil

Alcohols which are suitable for washing comprise methanol, propanol, isopropanol and glycerol, but preferably ethanol is used. Ethanol is a familiar, unsuspected food product which preferably is of natural origin, e.g. obtained by a natural fermentation process. By a proper selection of the fermentation ingredients an ethanol may be obtained with an attractive fragrance which may enrich the flavour of the washed olive oil.

The preferred washing conditions are:
Temperature 5-60°C, preferably 45-55°C;
Ethanol to oil ratio 1-10, preferably 2-4;
Water content in the ethanol 0-99.9 wt.%, preferably 4-8 wt.%.
On a technical scale the washing is preferably carried out as a counter current process in a rotating disc contactor, but other usual equipment such as stirred tank or packed column can be used as well.

It has been found that the quality of the alcohol washed oil, especially its flavour stability, may be increased further by having the washing treatment preceded or followed by a heat treatment under mild conditions. According to a preferred method of the invention the olive oil is heated under quiescent conditions at a temperature of 5-270°C, preferably 25°-270°C, more preferably 50°-110°C and most preferably 85°-100°C in a nitrogen atmosphere. The heating preferably takes 2-48 hours, more preferably 5-15 hours.
A preferred treatment comprises heating at 50°-110°C for 2-48 hours.
It is believed that possibly the quality improvement has to be attributed to the decomposition of peroxides. Therefore it has appeared to be most convenient to stop the heating treatment as soon as the peroxide value has dropped to a desired low value.

It has appeared that the olive oil flavour can be still further improved or at least varied when the above steps are followed by stripping the olive oil with steam or an inert gas such as nitrogen. The temperature may be 5-270°C, but mild conditions are preferred, which are:
Temperature 50-120°C, preferably 85-100°C;
Pressure 1-100 mbar, preferably 3-20 mbar;
Steam consumption 0.01-20 wt.% upon oil per hour, preferably 0.1-1.5 wt.% per hour.
The duration of stripping depends on the pace of disappearance of off-flavour, which is dependent on the stripping temperature. A proper combination of time and temperature can be easily established: suitable combinations of stripping conditions are e.g. 3 h at 85°C and 20 mbar or 1 h at 100°C and 8 mbar.
Another advantage of the additional step is that the stripping gas removes in the same time the alcohol which has remained in the washed olive oil.

The invention can be used too for the improvement of poor quality oils which have been obtained by solvent extraction of olive residues. Although the products of this process are not allowed to be denoted as pure olive oil, the washing treatment may yield edible oils of much improved quality.

Because the use of methanol, ethanol or propanol for washing olive oil causes the formation of the corresponding palmitate ester, the presence of increased concentrations of these esters in pure olive oil blends indicates that at least one of the constituting oils has been subjected to alcohol washing. Therefore the invention is also embodied in a pure olive oil blend which contains at least 20 ppb (parts pro billion), preferably at least 70 ppb of the palmitate ester of either methanol, ethanol or propanol. The concentration of these esters can be established with standard analytical methods, particularly with analytical gas chromotography.

### Example 1

### Ethanol washing of crude Lampante oil in Rotating Disc Contactor

37.5 kg of crude Lampante oil is dried and filtered. To the oil, heated to 80°C while stirring under nitrogen, 0.1 wt.% of 50% aqueous citric acid solution is added and stirred for 15 minutes. Then 0.2 wt.% of water is added and stirred for another 15 minutes. Then 1 wt.% of Hyflo™, a filter aid is added and again stirred for 15 minutes. The mixture is dried by stirring 30 minutes at 80°C under 100 mbar. The oil is filtered under 2 bar nitrogen. This treatment has the effect that iron and other metals are removed and the colour is rectified.
The oil is cooled and washed at 50°C with food grade non-denatured ethanol with 8 wt.% of water by a counter current process in a Rotating Disc Contactor (RDC). The amount of ethanol is 2.5 times the weight of the oil. The oil and the ethanol are continuously fed at the top and the bottom of the column, respectively. Flow is 12 kg/h. The speed of the RDC stirrer is 450 rpm. The washed olive oil and the ethanol are collected at the bottom and the top of the column, respectively and recirculated. Approximately 3 hours are needed to achieve steady state, whereafter the olive oil and the used ethanol are collected.
The washed oil is subjected to steam distillation during 3 hours at 85°C and 20 mbar. 1.5 wt.% steam per hour is used. Dissolved ethanol is removed together with the off-taste components.
The obtained purified Lampante oil is stored under nitrogen until used for olive oil blending.
According to an organoleptic test the oil has a virgin taste without off-flavour.
The analytical and organoleptic data of the Lampante oil before and after the treatment are shown in Table I.

### Example 2

### Ethanol washing of crude Lampante oil in Rotating Disc Contactor

Example 1 was repeated with the following modifications: The amount of ethanol used for washing was 2.0 times the weight of the oil. The speed of the stirrer during washing was 380 rpm.
The steam distillation temperature was raised to 100°C, while the pressure was reduced to 8 mbar. Already after one hour the off-taste had disappeared.
According to an organoleptic test the oil did not show an off-flavour.
The analytical and organoleptic data of the Lampante oil before and after the treatment are shown in Table I.

### Example 3

| Olive oil blending | |
|---|---|
| Regular refined olive oil | 50 wt.% |
| Fine virgin olive oil | 30 wt.% |
| Lampante oil treated according to ex. 1 or 2 | 20 wt.% |

The three oils have been blended in the indicated ratio and organoleptically assayed. The blend contained 90 ppb ethyl palmitate.

For comparison purposes a pure olive oil blend has been prepared with the composition

| | |
|---|---|
| Regular refined olive oil | 50 wt.% |
| Fine virgin olive oil | 30 wt.% |
| Semi-fine virgin oil | 20 wt.% |

It appeared that the blend of the invention obtained the same organoleptic qualification as the relatively expensive comparison blend containing semi-fine virgin oil.

### Example 4

| Olive oil blending | |
|---|---|
| Extra virgin olive oil | 40 wt.% |
| Fine virgin olive oil | 40 wt.% |
| Lampante oil treated according to ex. 1 or 2 | 20 wt.% |

The three oils have been blended in the indicated ratio and organoleptically assayed. The blend contained 200 ppb of ethyl palmitate.

For comparison purposes a pure olive oil blend has been prepared with the composition

| | |
|---|---|
| Extra virgin olive oil | 50 wt.% |
| Fine virgin olive oil | 30 wt.% |
| Regular refined olive oil | 20 wt.% |

It appeared that the blend of the invention obtained the same flavour appraisal as the comparison blend which contains more of the expensive extra virgin olive oil.

**TABLE I**

| **Effect of the washing and heating treatment on properties of Lampante oil** | | | |
|---|---|---|---|
| | Before treatment | Ex. 1 | Ex. 2 |
| Free fatty acids (wt.%) | 6.79 | 0.31 | 0.34 |
| Hydroxyl | 9.4 | 3.9 | 2.1 |
| Peroxide value | 16.4 | 13.3 | 13.7 |
| PAV | 8.6 | 6.8 | 6.2 |
| E232, (1%,1cm) | 2.771 | 3.092 | 2.063 |
| E270, (1%,1cm) | 0.422 | 0.28 | 0.23 |
| Fe (ppm) | <0.01 | <0.01 | 0.14 |
| Cu (ppm) | 0.051 | 0.065 | 0.06 |
| Ethanol (ppm) | | <1 | <0.1 |
| Lovibond 1 cell Y | 16.0 | 9.70 | 10.2 |
| Lovibond 1 cell R | 0.93 | 1.12 | 0.8 |
| Ethyl palmitate (ppb) | 118 | 398 | 387 |
| Flavour acceptable for blending | no | yes | yes |

## Claims

1. Pure olive oil blend which contains a treated virgin olive oil, characterised in that the treated virgin olive oil is an alcohol washed virgin olive oil.

2. Pure olive oil blend according to claim 1, wherein 5-95 wt.% of an alcohol washed virgin olive oil is incorporated.

3. Pure olive oil blend, characterised in that the blend contains at least 20 ppb (parts pro billion) of the palmitate ester of either methanol or ethanol or propanol.

4. Pure olive oil blend according to claim 3, characterised in that the blend contains at least 70 ppb (parts pro billion) of the palmitate ester of either methanol or ethanol or propanol.

5. Pure olive oil blend according to any one of claims 1-2, characterised in that the alcohol washed virgin olive oil is ethanol washed virgin olive oil.

6. Pure olive oil blend according to any one of claims 1-2, 5, characterised in that the alcohol washed virgin olive oil is alcohol washed Lampante oil.

7. Method for the manufacture of a pure olive oil blend comprising mixing two or more virgin olive oils, characterised in that at least one of the virgin olive oils is an alcohol washed virgin olive oil.

8. Method according to claim 7, characterised in that the alcohol washed virgin olive oil is an ethanol washed virgin olive oil.

9. Method according to claim 7, characterised in that the alcohol washed virgin olive oil is alcohol washed Lampante oil.

10. Method for purifying olive oil comprising the following steps:
a. intimately mixing olive oil with an alcohol or with a mixture of alcohol and water where the alcohol is taken from the group comprising ethanol, methanol, propanol and glycerol,
b. separating the alcohol phase,
c. removing the dissolved alcohol from the oil,
where the alcohol treatment is preceded or followed by heating at 50-110°C for 2-48 hours the olive oil in an inert gas atmosphere.

11. Method according to claim 10, characterised in that a subsequent step is carried out comprising stripping the olive oil with steam or an inert gas.

12. Method according to claim 11, characterised in that the stripping is carried out at a temperature of 50-120°C.

13. Method according to any one of claims 10-12, characterised in that the alcohol is ethanol.

14. Method according to any one of claims 10-12, characterised in that Lampante oil is purified.

## Patentansprüche

1. Reine Olivenölmischung, die ein behandeltes Jungfernöl enthält, dadurch gekennzeichnet, daß das behandelte Jungfernöl ein mit Alkohol gewaschenes Jungfernöl ist.

2. Reine Olivenölmischung gemäß Anspruch 1, der 5 bis 95 Gew.-% eines mit Alkohol gewaschenen Jungfernöls einverleibt sind.

3. Reine Olivenölmischung, dadurch gekennzeichnet, daß die Mischung mindestens 20 ppb (parts pro billion) eines Palmitatesters von entweder Methanol oder Ethanol oder Propanol enthält.

4. Reine Olivenölmischung gemäß Anspruch 3, dadurch gekennzeichnet, daß die Mischung mindestens 70 ppb (parts pro billion) des Palmitatesters von entweder Methanol oder Ethanol oder Propanol enthält.

5. Reine Olivenölmischung gemäß irgendeinem der Ansprüche 1 bis 2, dadurch gekennzeichnet, daß das mit Alkohol gewaschene Jungfernöl ein mit Ethanol gewaschenes Jungfernöl ist.

6. Reine Olivenölmischung gemäß irgendeinem der Ansprüche 1-2, 5, dadurch gekennzeichnet, daß das mit Alkohol gewaschene Jungfernöl ein mit Alkohol gewaschenes Lampantöl ist.

7. Verfahren zur Herstellung einer Mischung aus reinem Olivenöl, bei dem zwei oder mehrere Jungfernöle gemischt werden, dadurch gekennzeichnet, daß mindestens eines der Jungfernöle ein mit Alkohol gewaschenes Jungfernöl ist.

8. Verfahren gemäß Anspruch 7, dadurch gekennzeichnet, daß das mit Alkohol gewaschene Jungfernöl ein mit Ethanol gewaschenes Jungfernöl ist.

9. Verfahren gemäß Anspruch 7, dadurch gekennzeichnet, daß das mit Alkohol gewaschene Jungfernöl ein mit Alkohol gewaschenes Lampantöl ist.

10. Verfahren zur Reinigung von Olivenöl, das die folgenden Schritte umfaßt:
a. inniges Vermischen von Olivenöl mit einem Alkohol oder einer Mischung eines Alkohols mit Wasser, wobei der Alkohol aus der Ethanol, Methanol, Propanol und Glycerol umfassenden Gruppe ausgewählt ist,
b. Abtrennen der Alkoholphase,
c. Entfernen des gelösten Alkohols aus dem Öl, wobei der Alkoholbehandlung Erwärmen des Olivenöls in einer Inertgasatmosphäre auf 50 bis 110°C für eine Dauer von 2 bis 48 Stunden vor- oder nachgeschalten ist.

11. Verfahren gemäß Anspruch 10, dadurch gekennzeichnet, daß ein nachgeschalteter Schritt durchgeführt wird, der das Strippen des Olivenöls mit Dampf oder einem Inertgas umfaßt.

12. Verfahren gemäß Anspruch 11, dadurch gekennzeichnet, daß das Strippen bei einer Temperatur von 50 bis 120 °C durchgeführt wird.

13. Verfahren gemäß irgendeinem der Ansprüche 10 bis 12, dadurch gekennzeichnet, daß der Alkohol Ethanol ist.

14. Verfahren gemäß irgendeinem der Ansprüche 10 bis 12, dadurch gekennzeichnet, daß Lampantöl gereinigt wird.

## Revendications

1. Mélange d'huiles d'olive pures contenant une huile d'olive vierge traitée, caractérisé en ce que l'huile d'olive vierge traitée est une huile d'olive vierge lavée avec un alcool.

2. Mélange d'huiles d'olive pures selon la revendication 1, dans lequel on incorpore 5 à 95% en poids d'huile d'olive vierge lavée avec un alcool.

3. Mélange d'huiles d'olive pures, caractérisée en ce que le mélange contient au moins 20 ppb (parties par milliard) de palmitate de méthanol ou d'éthanol ou de propanol.

4. Mélange d'huiles d'olive pures selon la revendication 3, caractérisé en ce que le mélange contient au moins 70 ppb (parties par milliard) de palmitate de méthanol ou d'éthanol ou de propanol.

5. Mélange d'huiles d'olive pures selon l'une quelconque des revendications 1 à 2, caractérisé en ce que l'huile d'olive vierge lavée avec un alcool est une huile d'olive vierge lavée avec de l'éthanol.

6. Mélange d'huiles d'olive pures selon l'une quelconque des revendications 1 à 2, caractérisé en ce que l'huile d'olive vierge lavée avec un alcool est l'huile Lampante lavée avec un alcool.

7. Procédé de fabrication d'un mélange d'huiles d'olive pures comprenant le mélange de deux ou plusieurs huiles d'olive, caractérisé en ce qu'au moins l'une des huiles d'olive vierge est une huile d'olive vierge lavée avec un alcool.

8. Procédé selon la revendication 7, caractérisé en ce que l'huile d'olive vierge lavée avec un alcool est une huile d'olive vierge lavée avec de l'éthanol.

9. Procédé selon la revendication 7, caractérisé en ce que l'huile d'olive vierge lavée avec un alcool est l'huile Lampante lavée avec un alcool.

10. Procédé de purification d'une huile d'olive comprenant les stades suivants :
a. mélange intime de l'huile d'olive avec un alcool ou un mélange d'alcool et d'eau, l'alcool étant choisi parmi l'éthanol, le méthanol, le propanol et le glycérol,
b. séparation de la phase d'alcool,
c. enlèvement de l'alcool dissous de l'huile, le traitement avec l'alcool étant précédé ou suivi par un chauffage à 50-110°C pendant 2 à 48 heures de l'huile d'olive sous une atmosphère de gaz inerte.

11. Procédé selon la revendication 10, caractérisé en ce qu'un effectue un stade ultérieur comprenant le stripage de l'huile d'olive avec de la vapeur ou un gaz inerte.

12. Procédé selon la revendication 11, caractérisé en ce qu'on effectue le stripage à une température de 50 à 120°C.

13. Procédé selon l'une quelconque des revendications 10 à 12, caractérisé en ce que l'alcool est l'éthanol.

14. Procédé selon l'une quelconque des revendications 10 à 12, caractérisé en ce que l'huile Lampante est purifiée.
